# EUROPÄISCHE PATENTSCHRIFT

(11) **EP 1 618 037 B1**
(45) Veröffentlichungstag und Bekanntmachung des Hinweises auf die Patenterteilung: **12.09.2007**
(21) Anmeldenummer: 04726947.7
(22) Anmeldetag: 13.04.2004
(51) Int. Cl.: B64D 11/00, A61G 3/00

(54) **LEICHTFLUGZEUG DER ULTRALEICHT-KLASSE UND SPORTFLUGZEUGKLASSE**
LIGHT PLANE IN THE ULTRALIGHT CATEGORY AND SPORT PLANE CATEGORY
AVION LEGER DE LA CLASSE ULTRA-LEGERE ET DE LA CATEGORIE SPORTIVE

(30) Priorität: 22.04.2003 CH 715032003
(43) Veröffentlichungstag der Anmeldung: 25.01.2006
(73) Patentinhaber: Light Wing AG, 6370 Stans (CH)
(72) Erfinder: GYGAX, Hans, CH-4142 Münchenstein (CH)
(74) Vertreter: Felber, Josef
(86) Internationale Anmeldenummer: PCT/CH2004/000224
(87) Internationale Veröffentlichungsnummer: WO 2004/094228

(56) Entgegenhaltungen:
- GB-A- 2 280 882
- US-A- 2 553 207
- US-A- 4 483 499
- US-A- 5 961 071
- H. FERT¹: "Nouveau pour 2002, Mini-Explorer" EURO FLY AERO, [Online] XP002287325 Gefunden im Internet: <URL:http://www.euroflyaero.com/mini-explo rer> [gefunden am 2004-07-06]

## Beschreibung

Diese Erfindung betrifft ein Leichtflugzeug der Ultralight-Klasse und Sport Plane Category, das heisst mit einem maximalen Abfluggewicht (Maximal Take-Off Weight MTOW) von 472.5kg in Europa und 590kg in den U.S.A. In Europa galt bisher für Ultralight-Flugzeuge, die auch als Ecolight-Flugzeuge bezeichnet werden, ein maximales Abfluggewicht von 450kg. Dieses Abfluggewicht wird jedoch in Kürze, das heisst ab 1. Januar 2004 zumindest in Deutschland und mit grosser Wahrscheinlichkeit auch in der Schweiz auf 472.5kg angehoben, bei einem maximalen zulässigen Trockengewicht des Flugzeuges von 297kg. In den U.S.A. wurde bereits eine neue Flugzeugkategorie eingeführt, nämlich die sogenannte Sport Plane Category SPC. Ein Flugzeug dieser Kategorie darf ein Trockengewicht von maximal 350kg aufweisen und ein maximales Abfluggewicht MTOW von 590kg.

Das hier vorgestellte Ultralight- oder Ecolight-Flugzeug ist in konventioneller Bauart konzipiert, das heisst mit einem am Bug angeordneten Kolbenmotor mit Zug-Propeller und dahinter angeordneter Kabinenzelle, mit einem Hauptflügel für den Auftrieb und einem Heckflügel als Höhenleitwerk zur Erzeugung eines Abtriebes, sowie einem Seitenleitwerk bzw. Seitenruder zwischen und oberhalb des Höhenleitwerks. Zwischen dem Motor und dem Heckflügel erstreckt sich der Rumpf.

Ultralight- oder Ecolight-Flugzeuge dieser grundsätzlichen Bauart sind bereits bekannt. Bei der Konstruktion jedes Ultralight-Flugzeuges spielt die Einhaltung der gesetzlichen Gewichtslimite eine alles dominierende Rolle. Wenn zwei Personen zu je 80kg Körpergewicht in die Luft gebracht werden sollen und ausserdem noch eine vertretbare Reichweite durch Mitnahme von ca. 20 Litern Treibstoff sichergestellt werden soll, so beträgt die Zuladung bereits 2 x 80kg = 160kg + ca. 20kg Treibstoff = ca. 180kg, weswegen das trockene, also unbetankte Flugzeug bisher bloss 270kg wiegen durfte, eine Vorgabe, die nur unter Ausschöpfung einer konsequenten Leichtbauweise einhaltbar war. Viele UL's (Ultralights) weisen ein Trockengewicht von ca. 290 kg oder gar noch einigen kg mehr auf und als Folge davon werden sie, wenn sie mit zwei Personen besetzt sind, quasi permanent mit einem Übergewicht von 20kg und mehr geflogen, was der Gesetzgeber bisher vielerorts mangels konsequenter Kontrollen einfach hinnahm. Problematisch ist das für das eigentliche Fliegen nicht, was die technische Seite angeht, hingegen sind etwa versicherungsrechtliche Konsequenzen gravierend, wenn es mit einem Übergewicht zu einem Unfall kommt. Nicht zuletzt auch deshalb wird jetzt durch eine Anhebung des maximalen Abfluggewichts um 22.5kg von 450kg auf 472.5 kg den gängigen Tatsachen Rechnung getragen und die häufig zustandekommenden Abfluggewichte werden nachträglich sanktioniert und für die Zukunft legalisiert.

Mit dem Ultralight-Flugzeug IKARUS C42 ist vom gleichen Flugzeugkonstrukteur wie dem Entwickler und Konstrukteur des vorliegend vorgestellten Ultralight-Flugzeuges bereits ein zweisitziges Flugzeug bekannt geworden, welches bei seinem Erscheinen neue Massstäbe hinsichtlich Gewicht, Anschaffungskosten und Treibstoffverbrauch setzte. Dieses Flugzeug IKARUS C42 wurde schon ca. 600 Mal in verschiedenste Länder verkauft und weist als Besonderheit ein zentrales Trägerrohr aus nahtlos gezogenem Aluminium auf, welches sich vom Motor im Bug bis zum Höhenleitwerk erstreckt und an welchem alle weiteren Teile direkt oder indirekt angebaut sind. Dieses zentrale Rohr verleiht dem Flugzeug ein überaus leichtes und stabiles Chassis, welches erhebliche Biege- und Torsionskräfte absorbieren kann. An diesem zentralen Rohr ist vorne der Kolbenmotor mit der Luftschraube angebaut, dann die Passagierzelle als Gitterrohrrahmen aus Aluminiumrohren, auf der Unterseite das komplette Fahrwerk mit Bugrad, dann der Hauptflügel als Hochdeckerflügel mit seinen V-förmigen Verstrebungen und am hinteren Ende des Rohres schliesslich das Höhen- und Seitenleitwerk. Die Steuermittel sind als gelenkige Gestänge in Form von drehbaren Schub- und Zugstangen ausgeführt, welche längs des zentralen Rohres an diesem gelagert und geführt sind. Die Aussenhülle des Flugzeuges, also sein von aussen sichtbarer Rumpf einschliesslich der Motorverkleidung und der beidseits der Passagierzelle angebauten Türen besteht aus kohlefaserverstärkten Kunststoffpanelen, die durchwegs keine tragenden Funktionen übernehmen müssen, sondern ausschliesslich und einzig der Einkapselung der Passagiere in eine Kabine und der Pflege der Aerodynamik dienen, und als Nebenwirkung natürlich auch die ästhetische Erscheinung des Flugzeuges bestimmen. Als Motor dient dem IKARUS C42 ein Viertakt-Rotax 912 UL mit einer Leistung von 58kW. Mit zwei Personen lässt sich damit eine Steigleistung von 5m/s erzielen und eine Reisegeschwindigkeit von 175km/h bei 75% Leistung. Dieses Flugzeug wiegt trocken dank seiner ausgeklügelten Konstruktion bloss 260kg. Mit zwei Personen zu je 80kg Gewicht besetzt bleiben nach der alten Gewichtsregel 30kg Zuladungskapazität für Treibstoff übrig und nach der neuen Regel sogar 52.5kg. Bei einem Treibstoffverbrauch von 10-12 l/h ergibt sich somit schon unter Einhaltung der alten Gewichtslimite von 450kg eine respektable theoretische Reichweite von ca. 430km bis 525km, die mit der neuen Gewichtslimite von 472.5kg auf 750km bis 920km erhöht wird.

Die Kabinen herkömmlicher Ultralight- oder Ecolight-Flugzeuge und auch jene des IKARUS C42 sind in ihren Ausmassen meist relativ eng ausgelegt, um den Luftwiderstand und auch das Gewicht gering zu halten. Ein UL wäre jedoch infolge seiner geringen Anschaffungs- und Unterhaltskosten und seiner geringen Lärmentwicklung ein hervorragendes Arbeitsflugzeug, namentlich für Patiententransporte, aber auch für andere Aufgaben, etwa für das Schleppen von Segelflugzeugen, für Überwachungs- und Kontrollaufgaben, etwa für die Küsten- und Grenzüberwachung etc., für die Verkehrs- und Stauüberwachung, für polizeiliche Fahndungsaufgaben oder die Luftüberwachung von Grossereignissen mit Massenandrang bis hin zu Foto- und wissenschaftlichen Messflügen. In vielen Ländern werden bisher Pipelines und Hochspannungsleitungen mittels Helikopter drahtlos kontrolliert. Böte ein Ultralight-Flugzeug mehr Frachtraum, so könnten viele Aufgaben, für die bisher Helikopter mit bekanntermassen sehr teuren Unterhaltskosten oder wesentlich grössere und teurere Flächen-Flugzeuge eingesetzt werden, von Ultralight-Flugzeugen übernommen werden, die sowohl in Bezug auf die Anschaffungskosten wie auch besonders in Bezug auf die Betriebskosten enorm viel kostengünstiger sind.

Der Kampf gegen ein zu hohes Gewicht verhinderte bisher die Konstruktion von grösseren Passagierzellen bzw. Fachträumen oder liess die Konstrukteure gar nie in dieser Richtung denken. Vielmehr versuchten die Konstrukteure stets, durch eine optimale Formgestaltung eine möglichst kleine und entsprechende leichte Passagierzelle zu konstruieren, sodass zwei Personen gerade noch einigermassen bequem darin Platz finden. Derzeit existiert denn auch kein Ultralight- oder Ecolight-Flugzeug, welches eine so grosse Kabine aufweist, sodass zum Beispiel ein Patient darin in liegender Lage in der Luft transportiert werden könnte, obwohl ja ein liegender Patient nicht schwerer als ein sitzender ist. Hierzu sind die Kabinen aus Gewichtsgründen viel zu klein bemessen, sowohl was deren Breite und noch vielmehr was deren Länge anbetrifft. Auch der zukunftsweisende IKARUS C42 hat eine wesentlich zu kurze Passagierzelle, als dass eine Person liegend darin transportiert werden könnte. Ein grösserer Stauraum wäre aber nicht nur für Patiententransporte wünschbar, sondern auch für verschiedene andere Einsätze eines derart ökonomisch betreibbaren Flugzeuges. Wenn zwei Personen mit einem Ultralight-Flugzeug eine mehrtägige Reise unternehmen wollen, so finden sie in den bisherigen Konstruktionen kaum Platz, um ihr Reisegepäck unterzubringen, auch wenn dessen Mitnahme aus Gewichtsgründen ohne weiteres möglich wäre. Oftmals wäre Stauraum für ein Zweier-Zelt, für Fischer- oder Jägerausrüstungen, für Outdoor-Kochgeräte, für Proviant und ähnliches gefragt. Bei den bekannten Ultralight-Flugzeugen ist der Platz für solche Dinge nicht ausreichend. Auch für Mess- und Fotoflüge wäre ein grösseres Raumangebot in der Kabine zur Unterbringung der verschiedenen Gerätschaften nötig.

Von Euro Fly Aero, Hubert Ferté, Aerodrome de Montardoise, F in F-Montsuzain wurde im Jahr 2002 allerdings ein Flugzeug namens Mini-Explorer bekannt, das online veröffentlicht wurde unter XP002287325 bzw. online am 6. Juli 2004 auf http://www.euroflyaero.com/mini-explorer. Dieses Flugzeug ist vom Typ Ecolight und hat eine Kabine, die so gross ist, dass im Rumpf eine Person liegend Platz findet. Die Person liegt jedoch hinter den Sitzen. Das Flugzeug ist für 2 Personen zugelassen. Wenn eine Person fliegen soll und die zweite sich liegend im Rumpf befindet, ist der Schwerpunkt viel zu weit nach hinten verschoben, als dass mit diesem Mini-Explorer in diesem Beladungszustand geflogen werden könnte. Dieser Mini-Explorer kann eine liegende Person in der Kabine bzw. im Rumpf nur aufnehmen, solange er am Boden steht, etwa zum Übernachten im Flugzeug.

Es ist deshalb die Aufgabe der vorliegenden Erfindung, ein Flugzeug der Ultralight-Klasse und Sport Plane Category, das heisst mit einem maximalen Abfluggewicht (Maximal Take-Off Weight MTOW) von je nach Vorschrift 472.5kg bis 590kg zu schaffen, welches eine wesentlich geräumigere Kabine aufweist, sodass als Mindestanforderung wenigstens eine erwachsene Person in liegender Lage auf einer Bahre darin lufttransportierbar ist.

Diese Aufgabe wird gelöst von einem Leichtflugzeug der Ultralight-Klasse und Sport Plane Category, das heisst mit einem maximalen Abfluggewicht (Maximal Take-Off Weight MTOW) von je nach Vorschrift 452.5kg bis 590kg mit am Bug angeordnetem Motor mit Zug-Propeller und dahinter angeordneter Kabinenzelle mit einer Breite für zwei nebeneinander angeordnete Passagiersitze, das sich dadurch auszeichnet, dass sich längs der Flugzeug-Längsachse ein Zentralrohr von mindestens 200mm Durchmesser als Chassis erstreckt, und dass ein Vierkantprofil hochkant quer unter diesem Zentralrohr durchgeführt ist und mit diesem verwindungssteif und kraftschlüssig verbunden ist, und dass die Kabine so gross gestaltet ist, dass oberhalb des Vierkantprofils das Niveau eines virtuellen, ebenen Kabinenbodens definiert ist, der sich quer über das Vierkantprofil hinaus auf der einen Seite des Zentralrohrs längs desselben erstreckt, wobei der freibleibende Raum oberhalb dieses virtuellen Bodens einen orthorhombischen Raum von wenigstens 190cm Länge, wenigstens 45cm Breite und wenigstens 40cm Höhe einschliesst und somit die Aufnahme einer auf einer Bahre liegenden Person zum Fliegen ermöglicht.
Es zeigt:
- Figur 1:: Die Chassiskonstruktion des Flugzeuges von der Seite her gesehen, wobei die Konturen von Zelle Rumpf und Flügeln strichliniert eingezeichnet sind;
- Figur 2:: Die Chassiskonstruktion von schräg vorne und oben gesehen;
- Figur 3:: Die Chassiskonstruktion von vorne und oben gesehen;
- Figur 4:: Einen Ausschnitt aus der Chassiskonstruktion mit dem quer eingebauten Vierkantprofil und der Sitzhalterung.
- Figur 5:: Die Chassiskonstruktion mit Motor, Instrumentenbrett,Fahrwerk und angedeutetem Flügel von schräg hinten gesehen;
- Figur 6:: Das Flugzeugkonzept nach Figur 5 mit seinen wichtigsten Konstruktionsmassen und Winkeln;
- Figur 7:: Eine in die Kabine einführbare und darin befestigbare Spezial-Bahre zum liegenden Transport eines Patienten;
- Figur 8:: Der Bewegungsweg einer Spezial-Bahre beim Patientenverlad in die Flugzeugkabine in mehreren Momentaufnahmen dargestellt;
- Figur 9:: Das gesamte Flugzeug von seiner rechten Seite her gesehen, mit geöffneter Türe und liegend darin verladenem Patienten;
- Figur 10:: Das gesamte Flugzeug von seiner linken Seite her gesehen.

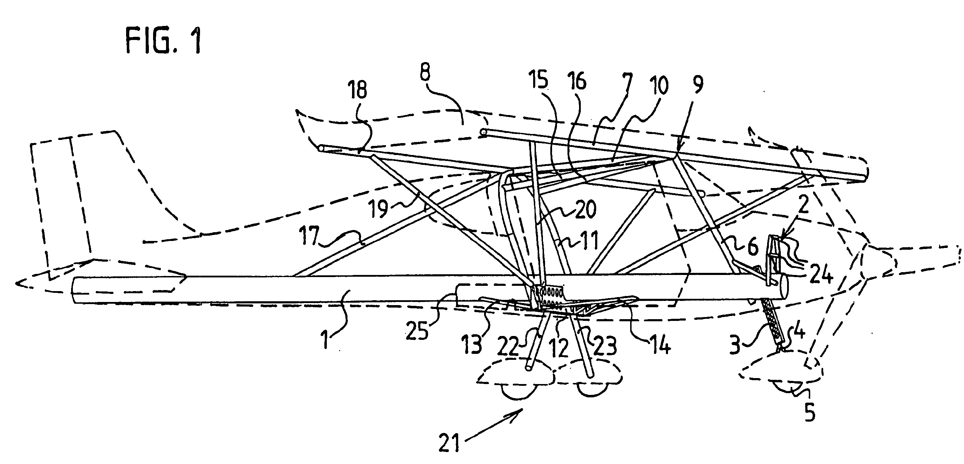

In Figur 1 ist die generelle Konstruktionsweise dieses Flugzeuges anhand einer perspektivischen Ansicht dargestellt. Das grundlegende Merkmale ist das Zentralrohr 1, welches sich fast über die ganze Flugzeuglänge erstreckt. Es handelt sich im gezeigten Beispiel um ein nahtlos gezogenes Aluminiumrohr von 200mm Aussendurchmesser und 1.8mm Wandstärke. An diesem Zentralrohr 1 sind alle weitere Bestandteile des Flugzeuges angebaut und verstrebt. Vorne beginnend erkennt man, dass oben auf dem vorderen Endbereich des Zentralrohres 1 die Motorhalterung 2 angeordnet ist. Kurz dahinter durchsetzt ein seitlich gelochtes Vierkantrohr 3 von unten leicht schräg nach hinten geneigt das Zentralrohr 1. In diesem Vierkantrohr 3 ist ein Federbein untergebracht, welches unten eine Radgabel 4 trägt, an welcher das Vorderrad 5 des Fahrwerks gelagert ist. Weiter hinten ist das Zentralrohr 1 von einem schräg nach hinten geneigten Aluminiumrohr 6 durchsetzt, das in einer längs der Mitte des Zentralrohrs 1 vertikalen Ebene verläuft. Dieses Rohr 6 mündet in ein Querrohr 7, welches die Vorderkante des Tragflügels 8 markiert. Von diesem Mündungspunkt 9 aus erstreckt sich ein zentrales Scheitelrohr 10 bis zum Scheitel eines Rohrbogens 11, der leicht nach hinten geneigt angeordnet ist. An den unteren Enden dieses Rohrbogens 11 ist ein Alu minium-Vierkantprofil 12 quer zum Zentralrohr 1 angeordnet und verläuft unter diesem Zentralrohr 1 hindurch. Die Enden des Rohrbogens 11 sind an den Hinterseiten dieses Vierkantprofils 12 mit Halterungselementen festgeschraubt. Das Vierkantprofil 12 erstreckt sich über die ganze Breite der Kabine und misst deshalb in der Länge ca. 120cm. Seine beiden Seiten sind gelocht oder mit ähnlichen Materialaussparungen versehen, um Gewicht einzusparen, und seine Unterseiten sind hinten und vorne mit Rohrstreben 13,14 schräg an das Zentralrohr 1 abgestrebt. Überall, wo Streben an oder durch das Zentralrohr 1 führen, sind diese mit Winkelelementen mit dem Zentralrohr 1 kraftschlüssig verschraubt. Auch das Vierkantprofil 12 ist mittels passender Befestigungselemente mit dem Zentralrohr 1 verschraubt, sodass es in jeder Richtung mit demselben ein steifes Kreuz bildet. Direkt hinter dem Vierkantprofil 12 und auf den nach hinten führenden Streben 13 liegend ist der kastenförmige Treibstofftank 25 aus kohlefaserverstärktem Kunststoff angeordnet. Dieser Treibstofftank 25 weist oben eine halbzylindrische Vertiefung für das Zentralrohr 1 auf und unten schräg verlaufende Ausnehmungen, mit denen er passgenau auf den Streben 13 aufliegt. Zu seiner Herstellung werden kohlefaserverstärkte Kunststoff-Matten unter Warmverformung in eine Negativ-Form für die Aussenwände des von ihm gebildeten Behälters eingelegt. Diese Negativ-Form ist mit vielen Sauglöchern versehen, mittels derselben die Matten infolge Unterdrucks satt und ohne Lufteinschluss an die Form anpressbar sind. Somit lässt sich ein äusserst leichter, ca. 100 Liter fassender und genau in die Konstruktion passender Treibstoff-Behälter herstellen. Der Rohrbogen 11 ist im Bogenbereich von der Seite her mit zwei Schrägstreben 15,16 nach vorne zum zentralen Horizontalrohr 10 hin verstrebt. Auf seiner Hinterseite ist der Rohrbogen 11 von seinem Scheitel aus mit einer Rumpfstrebe 17 schräg nach unten auf die Oberseite des Zentralrohrs 1 abgestrebt. Daher ist dieser Rohrbogen 11 sowohl gegen eine Schwenkung um seine Befestigungspunkte mit dem Vierkantprofil 12 wie auch gegen eine Verwindung verstrebt und somit äusserst stabil. Über seinem Scheitel ist ein bezüglich der Flugzeuglängsachse quer und horizontal verlaufendes Rohr 18 angeordnet, welches im hinteren Bereich innerhalb des Tragflügels 8 verläuft und die Flügelhinterkante definiert. An diesem Querrohr 18 sind weitere Rohre, die hier nicht eingezeichnet sind, parallel zu diesem Querrohr 18 verlaufend und verdrehbar an diesem Querrohr 18 angelenkt. Sie verlaufen im Innern längs der Vorderkante von zwei im Querschnitt tropfenförmigen Alublechprofilen, die der Länge nach aneinander anschliessen. Das am Flügel äussere wirkt als Querruder und das innere als Landeklappe. Die Bespannung des Tragflügels 8 besteht vorteilhaft aus Aluminiumblech, welches längs mehrerer hier nicht eingezeichneter Flügelprofil-Elemente zwischen dem vorderen Querrohr 7 und dem hinteren Querohr 18 geführt und an denselben befestigt ist. Als Variante kann auch eine Bespannung aus textilverstärkter Kunststoff-Folie eingesetzt werden. Die beiden Enden des Tragflügels sind mit Kunststoff-Winglets ausgerüstet, welche für eine strömungsgünstige Ablösung der Randwirbel sorgen und damit den Luftwiderstand des Tragflügels 8 reduzieren. Die Querrohre 7,18, welche die Flügelvorder- und Flügelhinterkante definieren, sind mit je einem Rohr 19,20 an die Oberseite der äusseren Enden des Vierkantprofils 12 abgestrebt. Das Hauptfahrwerk 21 besteht aus zwei Federbeinrohren 22,23, welche von unten schiefwinklig und passgenau in das Innere des Vierkantprofils 12 münden und darin geführt und befestigt sind. Der Rumpf, die Kabine oder Zelle und die Motorverkleidung sind hier strichliniert angedeutet. Sie bestehen durchwegs aus Kohlefaser- oder Glasfaser-Verbundstoff oder dünnen Kunststoff-Platten, und zwar aus mehreren, möglichst grossen Paneelen, die mit dem Chassis verschraubt sind. Es ist klar, dass hier nur die wirklich zentralen Elemente des ganzen Chassis eingezeichnet und beschrieben werden. Im Bereich des Brandschots sind selbstverständlich weitere Verstrebungen vorhanden, die jedoch bereits aus der Konstruktion des bekannten C42 hervorgehen. Die Motorhalterung 2 ist nach hinten mehrfach an das Zentralrohr 1 abgestrebt und weist an den Punkten 24 je eine nach vorne gerichtete Gewindebüchse auf, an welchen der Motor verschraubt werden kann. Für dieses Flugzeug kommt zum Beispiel ein Kolbenmotor der Marke ROTAX 914 mit Turbolader zum Einsatz, der auf dem Prüfstand eine maximale Leistung von 125 PS abgibt. Durch die besondere Konzeption des Chassis und der Motoraufhängung 2 bleibt hinter derselben und vor dem Brandschot genügend Raum, um einen Ladeluftkühler unterzubringen, welcher dem Motor zu einer Leistungssteigerung auf bis zu 135 PS verhilft. Auch dieses ist eine wesentliche Neuerung, denn kein bisheriges Ultralight-Flugzeug bot konstruktionsbedingt genügend Raum für den Einbau eines Ladeluftkühlers hinter dem Motor und im Innern der Motor-Cowling. Die Motorhalterung 2 erlaubt im übrigen den Einbau verschiedener Motoren, je nach Wunsch und Bedarf. Denkbar wäre insbesondere etwa der Einbau eines Flug-Dieselmotors von Thielert sowie anderer moderner Flugzeugmotor-Konstruktionen wie etwa eines Göbler-Hirth 3701 ES Dreizylinder-Zweitaktmotors mit Einspritzung und 100 PS Leistung bei einem Eigengewicht von bloss 45kg.

Das Besondere, Neue und Überraschende am hier vorgestellten Flugzeug ist nun, dass die Kabine unter Einhaltung der Auflagen in Bezug auf Trockengewicht und maximales Abfluggewicht trotzdem derart geräumig gestaltet ist und mit so grossen Türen ausgerüstet ist, dass es möglich wird, einen erwachsenen Patienten auf einer Bahre einerseits in die Kabine zu verladen und die Bahre dort in einer Lage zu arretieren, welche innerhalb der zulässigen Gewichtsverteilung bleibt, sodass also der Schwerpunkt des beladenen Flugzeuges nicht zu stark nach hinten verschoben wird. Das wird erreicht, indem oberhalb des Vierkantprofils 12, welches unter dem Zentralrohr 1 durchgeführt ist, das Niveau eines virtuellen Bodens definiert wird, über demselben ein Raum freibleibt, welcher wenigstens einen orthorhombischen Raum von 190cm Länge, 45cm Breite und 40cm Höhe aufweist und somit die Aufnahme eines auf einer Bahre liegenden Patienten ermöglicht.

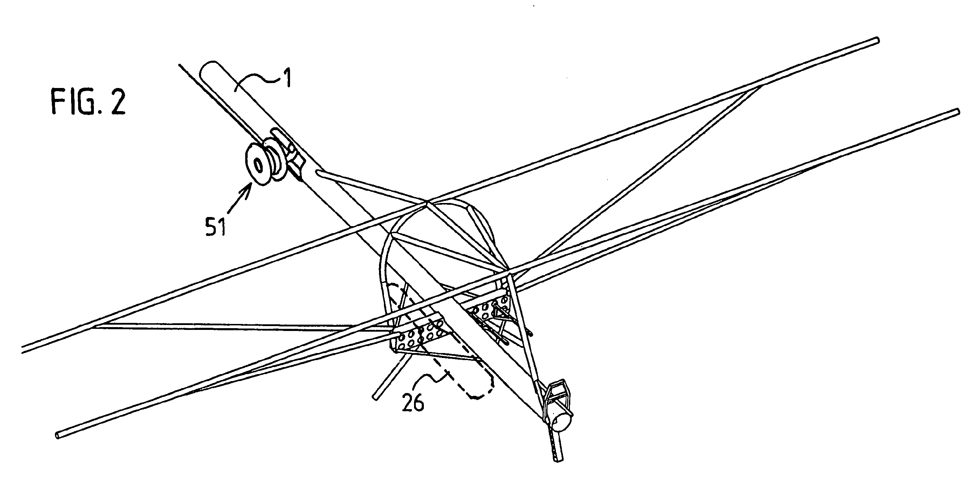

In Figur 2 erkennt man die wesentlichen Elemente der Chassiskonstruktion des Flugzeuges von schräg oben gesehen. In dieser Darstellung ist die Lage einer eingeführten Spezial-Bahre 26 angedeutet. Am hinteren Bereich des Zentralrohres 1, der innerhalb des Rumpfes verläuft, ist seitlich am Zentralrohr 1 ein Seilspill 51 mit einem Elektromotor und Winkelgetriebe angebaut, ab dem ein Seil durch eine aussen am Heck des Flugzeuges montierte, nach hinten trichterförmig sich erweiternde Mündung nach aussen führt. Das auf dem Seilspill aufhaspelbare Seil dient zum Segelflugzeug-Schlepp. Dank der stabilen Konstruktion mit einem Zentralrohr 1, das sich bis zum Flugzeugheck erstreckt, kann ein solches Seilspill 51 innerhalb des Flugzeugrumpfes untergebracht werden, denn die am Heck bzw. an der dort montierten Seilmündung allenfalls auftretenden, mitunter schiefwinklig zum Zentralrohr 1 wirkenden, teilweise schlagenden Zugkräfte können von demselben ohne weiteres absorbiert werden. Ein solches komplettes elektrisches Seilspill von bloss 10kg Gewicht wird von der Airla Flugzeug Service AG in CH-3368 Bleienbach angeboten und eignet sich hervorragend, um den Segelflugschlepp mit diesem Leichtflugzeug zu ermöglichen. Weil das Seil nach dem Ausklinken des Segelflugzeuges elektrisch einziehbar ist, kann das Schleppflugzeug sofort zur Landung ansetzen, ohne eine Seilabwurfschlaufe fliegen zu müssen. Vor der Seilmündung ist ausserdem eine vom Pilotensitz aus über einen Seilzug betätigbare Schneidklinge montiert, sodass das Seil im Notfall vom Pilotensitz gekappt werden kann.

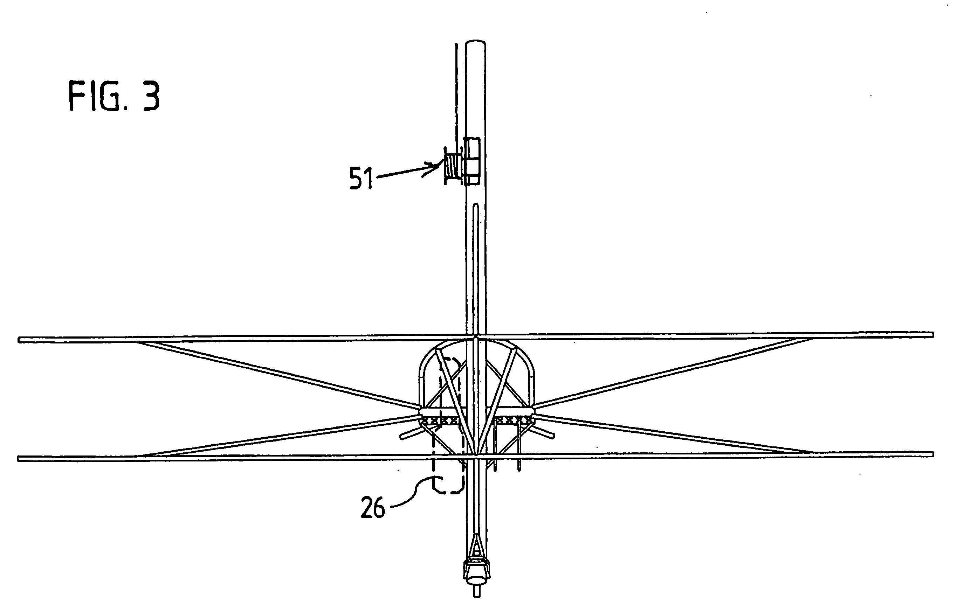

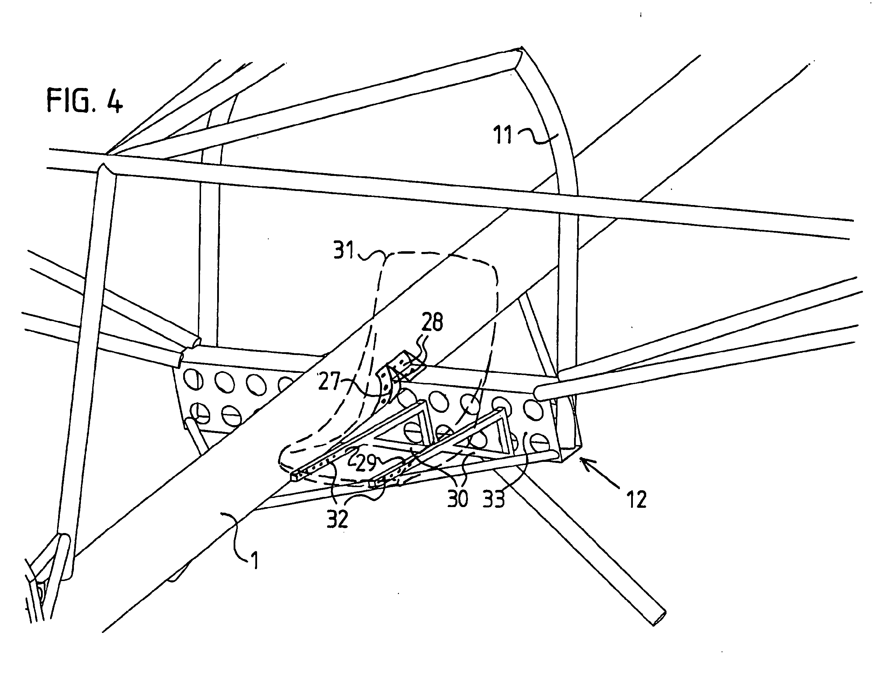

Die Figur 3 zeigt dieselbe Konstruktion zentral von oben nach schräg hinten gesehen. Auch hier ist die Lage der eingesetzten Bahre 26 eingezeichnet. Die Figur 4 zeigt die Konstruktion im Bereich des Vierkantprofiles 12 in vergrösserter Darstellung, und zwar mit Blick von schräg vorne auf die Seite des Pilotensitzes. Das Vierkantprofil 12 ist in der hier gezeigten Ausführung mit einer kreissegmentförmigen Aussparung 27 auf seiner Oberseite versehen, in welche das Zentralrohr 1 genau einpasst, wonach das Vierkantprofil 12 mittels aufgesetzter Befestigungselemente 28 mit dem Zentralrohr 1 verschraubt wird. Ebensogut kann aber das Vierkantprofil 12 auch ohne eine Aussparung gänzlich unter dem Zentralrohr 1 durchgeführt sein und mit entsprechend geformten Befestigungselementen mit dem Zentralrohr 1 verschraubt sein.

Auf der Vorderseite 33 des Vierkantprofils 12 erkennt man die Halterung für den Pilotensitz. Hierzu erstrecken sich zwei Halterungsschienen 29 von der Vorderseite 33 des Vierkantprofils 12 aus nach vorne, wobei sie gegen vorne leicht nach oben geneigt sind. Diese Halterungsschienen 29, die im Querschnitt auch rund sein können, sind in ihrem hinteren Bereich mittels je einer Strebe 30 schräg nach unten ebenfalls an die Vorderseite 33 des Vierkantprofils 12 abgestrebt. Der Pilotensitz besteht nun aus einem strichliniert angedeuteten Schalensitz 31 aus faserverstärktem Kunststoff, welcher nach ergonomischen Gesichtspunkten gestaltet ist und mittels Schlitten auf den beiden Schienen 29 verschiebbar geführt und gehaltert ist. Die Schlitten können in verschiedenen Verschiebepositionen mittels federbelasteter Querbolzen mit den Schienen 29 verrastet werden, die hierzu Querbohrungen 32 aufweisen. Dadurch, dass die Halterungsschienen 29 in Richtung nach vorne leicht nach oben geneigt sind, wird erreicht, dass die Sitzhöhe bei einem Verschieben des Sitzes 31 nach hinten leicht abgesenkt wird, sodass also ein grosser Pilot oder Passagier tiefer sitzt als umgekehrt ein kleiner Pilot oder Passagier, der den Sitz weiter nach vorne verschieben wird, wodurch der Sitz 31 in Bezug auf seine Höhenlage angehoben wird.

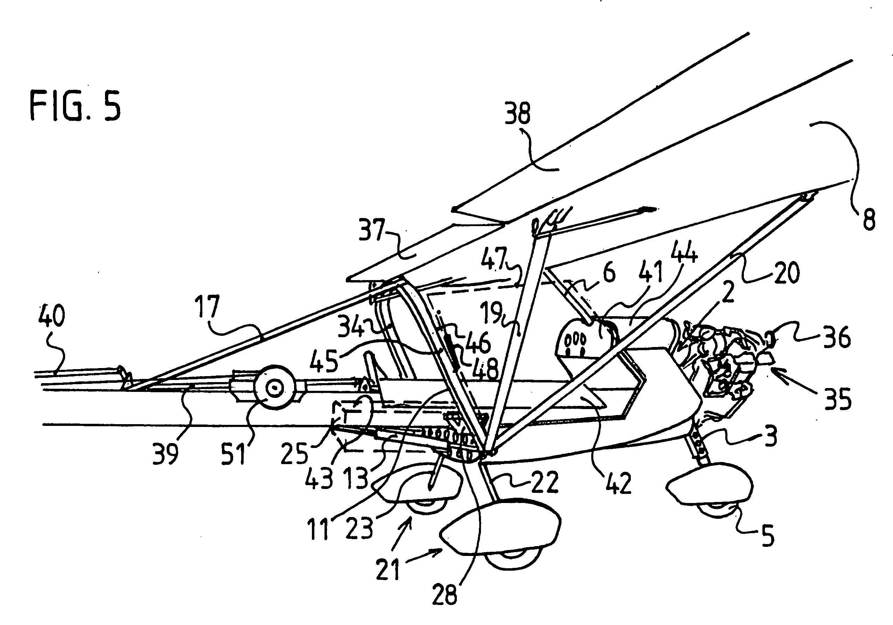

In Figur 5 sieht man ein im Prinzip gleiches Flugzeug in einem weiteren Baustadium. Hier ist bereits der rechte Tragflügel 8 montiert, der mit den Flügelstreben 19,20 gegen das Vierkantprofil 12 abgestrebt ist. Im hier gezeigten Beispiel ist das Vierkantprofil 12 ohne Ausnehmung auf seiner Oberseite komplett unter dem Zentralrohr 1 durchgeführt und mittels der Befestigungselemente 28 mit demselben zu einem verwindungsstabilen und kraftschlüssigen Kreuz verschraubt. Der Treibstofftank 25 liegt auf den von den Endbereichen des Vierkantprofils 12 schräg nach hinten zum Zentralrohr 1 führenden Streben 13 auf. Er weist auf seiner Oberseite eine Ausnehmung auf, längs welcher das Zentralrohr 1 verläuft, sodass der Tank symmetrisch auf beiden Seiten des Zentralrohrs 1 hinter dem Vierkantprofil 12 auf den Streben 13 aufliegt. Seine Oberseite 43 liegt etwa auf der Höhe der Zentralrohrmitte. Vorne sieht man den an der Motorhalterung 2 angebauten Motor 35 mit Propellerflansch 36, dahinter die Motorabdeckung 44, unter welcher sich der Ladeluftkühler befindet und an die Motorhalterung anschliessend die Instrumententafel 41, durch deren oberen Rand in der Mitte die Strebe 6 verläuft. Im Bereich der Kabine ist auf das Zentralrohr 1 eine Mittelkonsole 42 aufgesetzt, welche die Rudergestänge abdeckt und auf ihrer Oberseite als Armlehne und Ablagefläche gestaltet ist. Hinter dieser Mittelkonsole 42 erkennt man die Gestänge 39,40 für die Betätigung des Höhenruders. Der Rohrbogen 11 ist mit einem bogenförmigen Einfassprofil 34 mit U-färmigem Querschnitt aus Kunststoff eingefasst und verschraubt. Dieses ist gegen hinten offen, sodass es also von vorne über den Rohrbogen 11 gestülpt ist und mit seiner Aussenseite 45 die Kabinenaussenseite definiert. Seine Vorderseite 46 hingegen definiert die Hinterseite der Türöffnung, das heisst die hintere, innere Seite des Türrahmens. Die strichliniert angedeutete Tür 47 ist oben angeschlagen und mittels einer Gasdruckfeder 48 an der Vorderseite 46 des Bogenprofils 34 abgestützt.

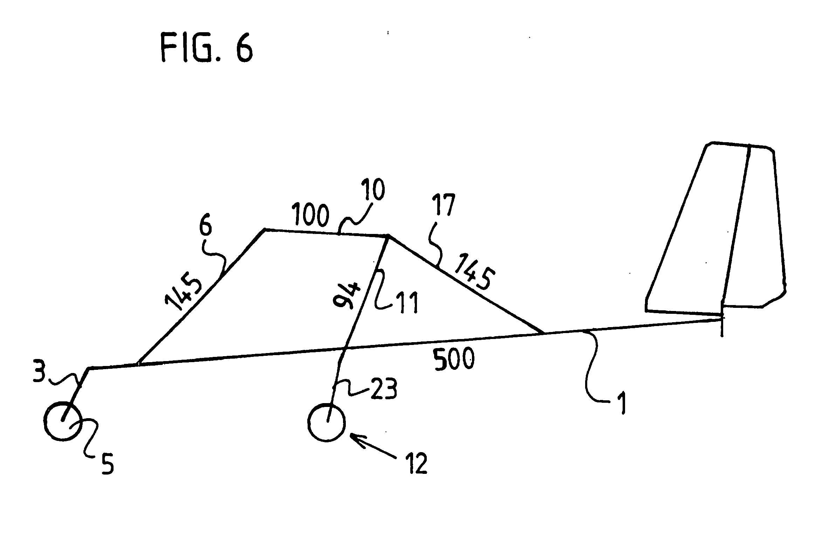

In Figur 6 ist dieses Flugzeug nach Figur 5 mit seinen wichtigsten Konstruktionsmassen in Zentimetern und mit den wesentlichsten Winkeln in Bezug auf die Lage des Zentralrohrs 1 sowie der daran angebauten Streben dargestellt. Man erkennt, dass das Zentralrohr 1 gegen vorne leicht nach unten geneigt ist, mit einem Winkel von ca. 5°. Dieses Flugzeug ist in Bezug auf seine Statik so ausgelegt, dass es als derzeit (April 2003) einziges Ultralight-Flugzeug gleichzeitig sowohl die kommende Norm mit einem maximalen Abfluggewicht (Maximal Take-Off Weight MTOW) von 472.5kg bei einem Trockengewicht von 297kg in Europa wie auch jene mit einer MTOW von 590kg bei einem Trockengewicht von 350kg in den U.S.A. erfüllt. Weil das Flugzeug mit einem Trockengewicht von 297kg in den U.S.A. noch viel Gewichtsreserven verfügt, das heisst insgesamt eine Zuladung von 293kg erlaubt, ist ohne weiteres der Bau einer Version mit Schwimmern oder eine Kombination von Schwimmern mit einem Fahrwerk möglich. Schwimmer tragen etwa 40kg zur Abflugmasse bei und daher verbleiben immer noch ca. 250kg als Zuladekapazität, was viele Einsatzmöglichkeiten eröffnet, die bisher einem Flugzeug der Sport Plane Category verschlossen waren.

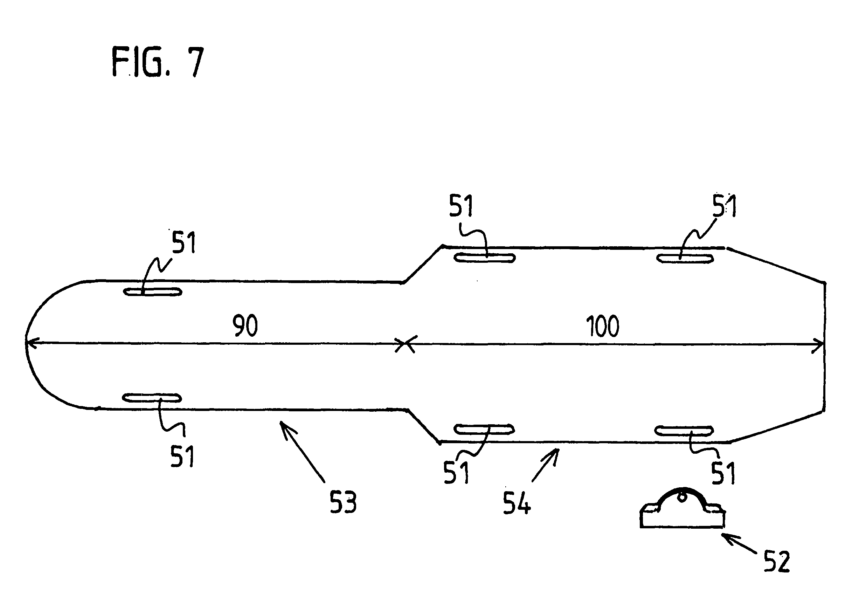

In Figur 7 ist eine Spezial-Bahre 26 im Grundriss dargestellt, wie sie zum Verladen und Befestigen eines liegend zu transportierenden Patienten in diesem Leichtflugzeug geeignet ist. Um Platz für den Verlad zu schaffen, ist die Bahre 26 im ca. 90cm langen Beinbereich 53 schmaler ausgeführt als im ca. 100cm langen Torusbereich des zu transportierenden Patienten. Die Bahre 26 misst in ihrer Gesamtlänge ca. 190cm und ist im Torusbereich 54 etwa 45cm breit und im Beinbereich etwa 30cm breit. An ihren Seitenbereichen weist sie eine Anzahl Grifflöcher 51 auf, die auch zum Befestigen der Bahre 26 im Flugzeug dienen können, wobei die Bahre mit diesen Löchern 51 über im Flugzeug am Chassis abgestütze halbrunde Halterungen 52 stülpbar ist. Eine solche Halterung 52 ist neben der Bahre 26 angedeutet.

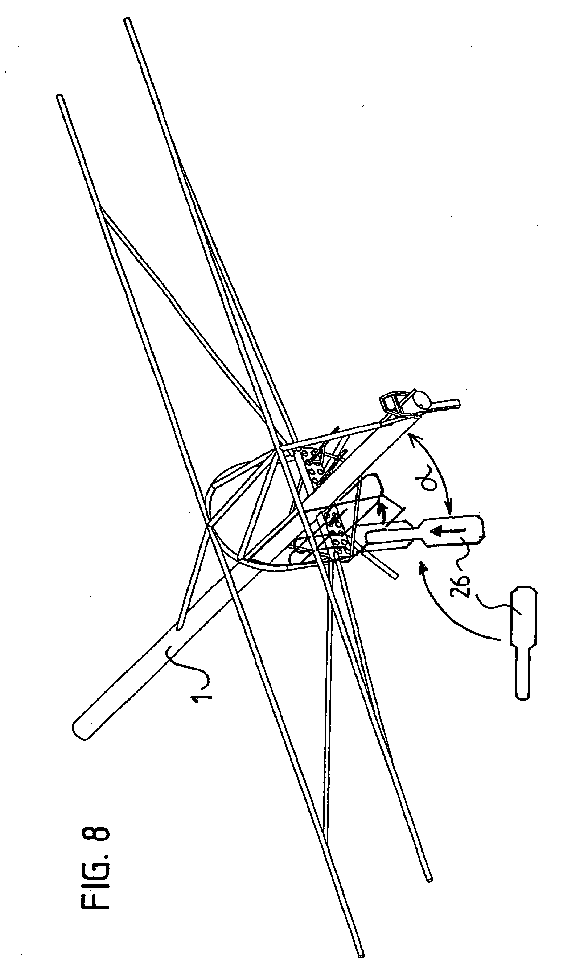

Die Figur 8 zeigt, wie diese Spezial-Bahre 26 mit einem auf ihr liegenden Patienten in das Flugzeug verladen werden kann. Zunächst wird die Bahre 26 in einem Winkel α von etwa 30° bis 45° zur Flugzeuglängsachse mit dem Beinbereich voran von der Flugzeugnase aus in das Kabineninnere geschoben, bis ihr Ende am Zentralrohr 1 anschlägt. Dann wird die Bahre 26 mit ihrem kopfseitigen Ende unter weiterem Einschieben gegen die Flugzeuglängsachse hin geschwenkt, bis sie schliesslich parallel zum Zentralrohr 1 neben demselben auf den vorgesehenen Halterungen zu liegen kommt und über dieselben gestülpt werden kann.

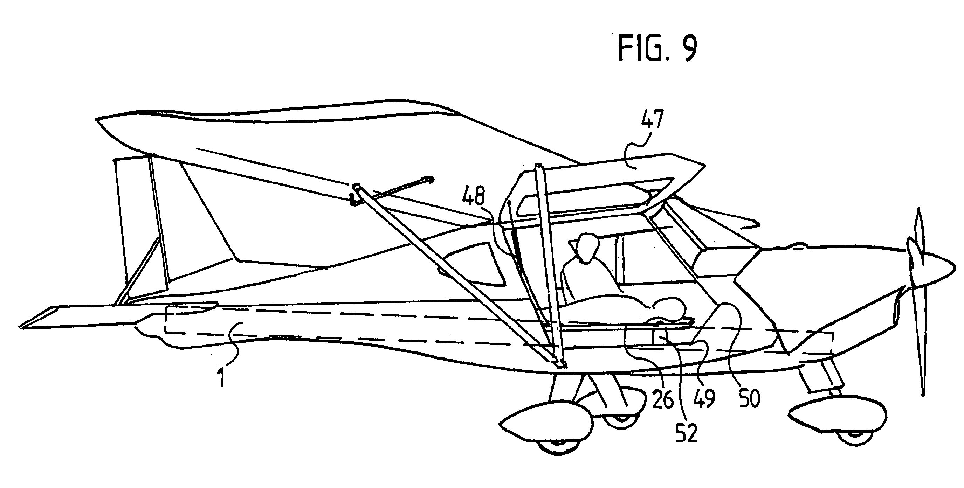

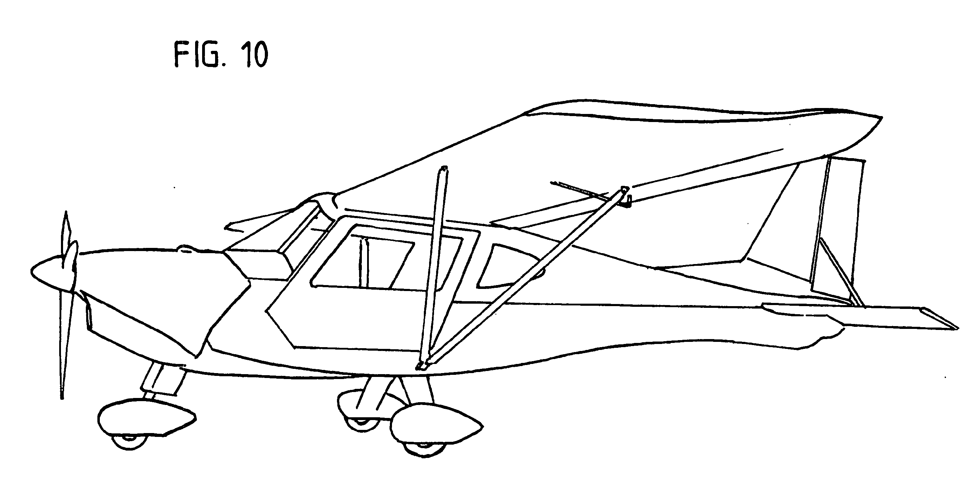

Die Figur 9 zeigt das vollständige Flugzeug mit geöffneter rechter Seitentüre 47. Die Gasdruckfeder 48 stemmt die Türe 47 nach oben, sodass sie mit geringem Kraftaufwand geschlossen und geöffnet werden kann und im geöffneten Zustand wie man hier sieht die Türöffnung komplett freigibt. Die Türöffnung misst oben 100cm in der Breite, hinten ist die Türöffnung 87cm hoch, unten 95cm breit und an der breitesten Stelle 120cm breit. Diese Türöffnung erlaubt deshalb auf der Höhe ihrer grössten Breite das Einführen und Einschwenken einer Bahre 26 wie das in Figur 7 gezeigt ist. Die untere, vordere Ecke 49 der Türöffnung befindet sich etwa auf Höhe der Mitte des dahinter verlaufenden Zentralrohres 1 und die vorderste Ecke 50 der Türöffnung etwa 20cm oberhalb des oberen Scheitelpunktes des dahinter verlaufenden Zentralrohres 1. Die Kabine misst auf der Höhe der breitesten Stelle der Türöffnung im Grundriss vorne immerhin 115cm in der Breite, hinten 127cm in der Breite und ist 120cm lang. In der hier gezeigten Darstellung ist ein Patient in liegender Lage auf seiner solchen Bahre 26 im Flugzeug liegend gezeigt. Der Kopf des Patienten liegt dabei hinter der Instrumententafel und in Reichweite der Hände des auf der anderen Seite sitzenden Piloten. Die Figur 10 zeigt das Flugzeug von der linken Seite her gesehen mit geschlossenen Türen.

## Patentansprüche

1. Leichtflugzeug der Ultralight-Klasse und Sport Plane Category, das heisst mit einem maximalen Abfluggewicht (Maximal Take-Off Weight MTOW) von je nach Vorschrift 452.5kg bis 590kg mit am Bug angeordnetem Motor mit Zug-Propeller und dahinter angeordneter Kabinenzelle mit einer Breite für zwei nebeneinander angeordnete Passagiersitze, ***dadurch gekennzeichnet,* dass** sich längs der Flugzeug-Längsachse ein Zentralrohr (1) von mindestens 200mm Durchmesser als Chassis erstreckt, und dass ein Vierkantprofil (12) hochkant quer unter diesem Zentralrohr (1) durchgeführt ist und mit diesem verwindungssteif und kraftschlüssig verbunden ist, und dass die Kabine so gross gestaltet ist, dass oberhalb des Vierkantprofils (12) das Niveau eines virtuellen, ebenen Kabinenbodens definiert ist, der sich quer über das Vierkantprofil (12) hinaus auf der einen Seite des Zentralrohrs (1) längs desselben erstreckt, wobei der freibleibende Raum oberhalb dieses virtuellen Bodens einen orthorhombischen Raum von wenigstens 190cm Länge, wenigstens 45cm Breite und wenigstens 40cm Höhe einschliesst und somit die Aufnahme einer auf einer Bahre (26) liegenden Person zum Fliegen ermöglicht.

2. Leichtflugzeug der Ultralight-Klasse und Sport Plane Category nach Anspruch 1, **dadurch gekennzeichnet, dass** in dem Vierkantprofil (12) von vorne gesehen gibelförmig angeordnete Federbeinrohre (22,23) für das Hauptfahrwerk gehaltert sind, sowie an dessen Rückseite ein sich über die Länge des Vierkantprofils (12) erstreckender, nach oben ragender Rohrbogen (11) mit seinen Enden befestigt ist, der von vorne von einem im Querschnitt U-förmigen Einfassprofil (34) aus Kunststoff eingefasst ist, welches den hinteren Türrahmen und die dortige Aussenkontur der Kabine definiert.

3. Leichtflugzeug der Ultralight-Klasse und Sport Plane Category nach Anspruch *2,* ***dadurch gekennzeichnet,* dass** der Rohrbogen (11) schräg nach hinten geneigt ist und längs der Innenwand der Zelle verläuft, deren oben angeschlagene Türen (47) seitlich mit ihren hinteren Rändern an den Rohrbogen (11) und sein Einfassprofil (34) anschliessen, oben wenigstens 100cm breit sind und auf der Höhe der Oberseite des Zentralrohres (1) wenigstens 120cm breit sind, sowie an ihrer Unterkante, die sich auf der Höhe der Unterseite des Zentralrohres (1) befindet, wenigstens 95cm breit sind, sodass eine Bahre (26) mit 190cm Länge, einem 90cm langen Beinbereich mit 30cm Breite und nach einer 20cm langen Abschrägung daran anschliessendem 45cm breiten Oberkörperbereich in Horizontallage schiefwinklig mit Fussseite voran von schräg vorne in die Kabine einschiebbar und hernach unter Einschwenken in die Endlage in der Kabine schiebbar ist, in welcher sie parallel zum Zentralrohr (1) neben demselben arretierbar ist.

4. Leichtflugzeug der Ultralight-Klasse und Sport Plane Category nach einem der Ansprüche 2 bis 3, ***dadurch gekennzeichnet,* dass** die Unterseite der Endbereiche des Vierkantprofils (12) wenigstens mittels je einer nach schräg hinten führenden Rohrstrebe (13) am Zentralrohr (1) verstrebt sind.

5. Leichtflugzeug der Ultralight-Klasse und Sport Plane Category nach einem der Ansprüche 2 bis 4, ***dadurch gekennzeichnet,* dass** der Treibstofftank (25) hinter dem Vierkantprofil (12) angeordnet ist und sich in seiner Breite über die Länge des Vierkantprofils (12) erstreckt, wobei er im Bereich des Zentralrohrs (1) auf seiner Oberseite eine Aussparung zur Aufnahme desselben aufweist und bei Anwesenheit von Rohrstreben (13), die von der Unterseite des Vierkantprofiles (12) nach schräg hinten ans Zentralrohr (1) führen, entsprechend geformte Aussparungen im Treibstoff-Tankboden aufweist, mit welchen er auf den Streben (13) aufliegt.

6. Leichtflugzeug der Ultralight-Klasse und Sport Plane Category nach einem der Ansprüche 2 bis 5, ***dadurch gekennzeichnet,* dass** sich an der in Flugrichtung vorderen Seite des Vierkantprofiles (12) wenigstens auf dessen linker Seite zwei nach vorne gerichtete, parallel zueinander verlaufende Halterungsschienen (29) erstrecken, die mittels Schrägstreben (30) nach unten an die Vorderseite (33) des Vierkantprofiles (12) abgestrebt sind und auf welchen Halterungsschienen (29) ein Sitz (31) mittels Schlitten in mehreren Positionen einrastbar geführt ist.

7. Leichtflugzeug der Ultralight-Klasse und Sport Plane Category nach einem der Ansprüche 2 bis 6, ***dadurch gekennzeichnet,* dass** der Tank (25) ein im Vakuumverfahren an einer Negativ-Aussenform hergestellter Behälter aus warmverformtem kohlefaserverstärktem Kunststoff mit einem Fassungsvermögen von wenigstens von 80 bis 120 Litern ist.

8. Leichtflugzeug der Ultralight-Klasse und Sport Plane Category nach einem der Ansprüche 2 bis 7, ***dadurch gekennzeichnet,* dass** hinter dem Vierkantprofil (12) am Zentralrohr (1) ein elektrisches Seilspill (51) mit Elektromotor und Winkelgetriebe angeordnet ist, zum Einziehen des Seiles eines Seilzuges zum Ziehen von Segelflugzeugen.

9. Leichtflugzeug der Ultralight-Klasse und Sport Plane Category nach einem der Ansprüche 2 bis 8, ***dadurch gekennzeichnet,* dass** die Motorhalterung (2) eine verschweisste Rohrkonstruktion mit vier zueinander parallel und nach vorne gerichteten, die Ecken eines Trapezes definierenden Gewindebüchsen (24) zum Anschrauben des Motors (35) ist, welcher über dem vorderen Endbereich des Zentralrohres (1) sitzt, und dass hinter der Motorhalterung (2) ein Ladeluftkühler angeordnet ist.

10. Leichtflugzeug der Ultralight-Klasse und Sport Plane Category nach einem der Ansprüche 2 bis 9, ***dadurch gekennzeichnet,* dass** es als Einsitzer zum Segelflugschlepp konzipiert ist, indem auf der dem Pilotensitz gegenüberliegenden Seite des Zentralrohres (1) ein Zusatztank montiert ist.

## Claims

1. Light aeroplane of the ultra light class and sport plane category, that means with a maximum take-off weight (Maximum Take-off Weight MTOW) each of 452.5kg to 590 kg according to the regulation with engine arranged at the nose with tractor propellers and cabin cell arranged behind it with a width for two passenger seats arranged side by side, **characterized in that** the **in that** along the aeroplane longitudinal axis a central tube of at least 200 mm diameters extends as a chassis, and **in that** a square profile passes edgeways transversely under this central tube which is connected with it rigidly against torsion and arranged in a non-positive way, and that the cabin is designed so large that above the square profile the level of a virtual plane cabin bottom is defined, that extends transversely over the square profile on the one side of the central tube along the same, in which the free remaining space above this virtual bottom presents an orthorhombic space with a length of at least 190 cm, a width of at least 45cm and a height of at least 40 cm and thus makes possible the reception of a person lying on a stretcher.

2. Light aeroplane of the ultra light class and sport plane category according to claim 1, **characterized in that** in the square profile (12), seen by the frontside, gable shaped shock strut tubes (22.23) are supported for the main landing gear, as well as at its back side an upward protruding tube bend (11) extending over the length of the square profile (12) is fixed with its ends, which is edged in the front by a U-shaped border profile (34) of plastic in the cross section, which defines the back door frame and the local external outline of the cabin.

3. Light aeroplane of the ultra light class and sport plane category according to claim 2, **characterized in that** the tube bend (11) is obliquely backward inclined and extends along the inner wall of the cell, whose above fixed doors (47) laterally are annexed to the tube bend (11) and its border profile (34) with its back border, above having a width of at least 100 cm and on the height of the upper side of the central tube (1) having a width of at least 120 cm, as well as at their lower edge, which lies on the height of the lower side of the central tube (1), having a width of at least 95 cm, so that a stretcher (26) with a length of 190 cm, a leg area with a length of 90cm having a width of 30 cm and after a 20 cm long bevel having a adjacent upper body area of a width of 45cm in horizontal position oblique-angled sliding with foot side obliquely ahead in front side into the cabin and hereafter sliding under swivelling into the final position in the cabin, in which it is retractile parallel to the central tube (1) besides the same.

4. Light aeroplane of the ultra light class and sport plane category according to one of the claims 2 to 3, **characterized in that** the lower side of the end zones of the square profile (12) are each braced by at least one tube strut (13) leading obliquely backward to the central tube (1).

5. Light aeroplane of the ultra light class and sport plane category according to one of the claims 2 to 4, **characterized in that** the fuel tank (25) is arranged behind the square profile (12) and extends in its width over the length of the square profile (12), comprising on its upper side a recess in the area of the central tube (1) for the reception of said tube and in case of attendance of tubing struts (13), which lead from the lower side of the square profile (12) obliquely toward the backside to the central tube (1), having accordingly framed recesses in the fuel tank bottom, with which it remains on the transverse struts (13).

6. Light aeroplane of the ultra light class and sport plane category according to one of the claims 2 to 5, **characterized in that** on the front side of the square profile (12) in flight direction at least on its left side extend two frontward pointed supporting rails (29) extending parallel one towards the other, which are braced by means of oblique struts (30) downwards to the front side (33) of the square profile (12) and on which supporting rails (29) a seat (31) is guided in a lock-up manner by means of carriages in several positions.

7. Light aeroplane of the ultra light class and sport plane category according to one of the claims 2 to 6, **characterized in that** the tank (25) is a container produced in the vacuum process at an external negative form consisting of warm deformed carbon fibre reinforced plastic with a capacity of at least 80 to 120 litres.

8. Light aeroplane of the ultra light class and sport plane category according to one of the claims 2 to 7, **characterized in that** behind the square profile (12) at the central tube (1) an electrical rope capstan (51) with electric motor and angle gear box is arranged, in order to retract the rope of a rope way for dragging gliders.

9. Light aeroplane of the ultra light class and sport plane category according to one of the claims 2 to 8, **characterized in that** the motor mount (2) is a welded tube construction with four thread sleeves (24) directed parallel towards each other and frontward, defining the edges of a trapezium, in order to screw on the motor (35), which sits over the front end zone of the central tube (1), and that has a charge air cooler arranged behind the motor mount (2).

10. Light aeroplane of the ultra light class and sport plane category according to one of the claims 2 to 9, **characterized in that** it is conceived as single-seater for a gliding trailer, an additional tank being mounted on the pilot's seat on the opposite side of the central tube (1).

## Revendications

1. Avion léger des classes ultra-légère et Sport Plane Category, c'est-à-dire avec un poids maximum au décollage (maximal take-off weight, MTOW), suivant les règlements, de 452,5 kg à 590 kg, avec à l'avant un moteur à hélice de traction et, disposée derrière, une cellule de cabine d'une largeur permettant de recevoir côte à côte deux sièges de passagers, ***caractérisé en* ce *que****,* suivant l'axe longitudinal de l'avion, il est disposé un tube central (1), d'au moins 200 mm de diamètre, et qu'un profilé carré (12) est réalisé debout sous ce tube central (1), perpendiculairement à lui et raccordé à lui solidairement et d'une manière stable au gauchissement, la cabine étant réalisée assez grande pour qu'au-dessus du profilé carré (12) le niveau d'un sol de cabine virtuel et plan soit défini, ce sol s'étendant perpendiculairement au-delà du profilé carré (12) sur un côté du tube central (1), le long de celui-ci, cependant que l'espace resté libre au-dessus de ce sol virtuel comprend un espace ortho-rhomboïdal d'au moins 190 cm de long, d'au moins 45 cm de large et d'au moins 40 cm de haut, permettant ainsi de recevoir pour un vol une personne sur un brancard (26).

2. Avion léger des classes ultra-légère et Sport Plane Category suivant la revendication 1, ***caractérisé en ce que*** dans le profilé carré (12), vu de devant, des jambes élastiques tubulaires (22, 23) sont disposées en triangle et maintenues pour le train d'atterrissage principal et qu'à l'arrière de ce train, il est fixé, par ses extrémités, un arceau tubulaire (11), s'étendant au-dessus de l'axe longitudinal du profilé carré (12) et le dépassant vers le haut, cet arceau étant entouré par devant par un logement profilé (34) en matière plastique et de section transversale en U, ce logement définissant le cadre arrière des portes et le contour extérieur de la cabine à cet endroit.

3. Avion léger des classes ultra-légère et Sport Plane Category suivant la revendication 2, ***caractérisé en ce que*** l'arceau tubulaire (11) est incliné vers l'arrière et s'étend le long de la paroi intérieure de la cellule, dont les portes (47), venues en butée dans le haut, se raccordent latéralement par leurs bords arrière à l'arceau tubulaire (11) et à son logement profilé (34), ces portes étant dans le haut larges d'au moins 100 cm et, à la hauteur du dessus du tube central (1), larges d'au moins 120 cm, cependant qu'à leur arête inférieure, située à la hauteur du dessous du tube central (1), elles sont larges qu'au moins 95 cm, de sorte qu'un brancard (26), d'une longueur de 190 cm, d'une zone longue de 90 cm pour les jambes, d'une largeur de 30 cm et comportant, après une inclinaison de 20 cm de long, une zone de 45 cm de large s'y raccordant pour la partie supérieure du corps, peut, à l'horizontale et les pieds devant, être poussé, depuis l'avant incliné, dans la cabine, puis être poussé et fait pivoté dans la position finale dans la cabine, où il peut être fixé parallèlement au tube central (1) et à côté de lui.

4. Avion léger des classes ultra-légère et Sport Plane Category suivant une des revendications 2 à 3, ***caractérisé en ce que*** le dessous des zones d'extrémité du profilé carré (12) est étayé pour chacune, sur le tube central (1) au moins au moyen d'une jambe de force tubulaire (13), menant obliquement vers l'arrière.

5. Avion léger des classes ultra-légère et Sport Plane Category suivant une des revendications 2 à 4, ***caractérisé en ce que*** le réservoir de carburant (25) est disposé derrière le profilé carré (12) et s'étend sur sa largeur, sur la longueur du profilé carré (12), cependant que, dans la zone du tube central (1), il présente sur sa face supérieure un évidement destiné à recevoir celui-ci et qu'en présence de jambes de force tubulaires (13), qui mènent du dessous du profilé carré (12), avec une inclinaison vers l'arrière, sur le tube central (1), il présente, dans le fond du réservoir, des évidements formés en conséquence, par lesquels il repose sur les jambes de force (13).

6. Avion léger des classes ultra-légère et Sport Plane Category suivant une des revendications 2 à 5, ***caractérisé en ce que**,* dans le sens du vol, sur la face avant du profilé carré (12) et au moins sur son côté gauche, s'étendent deux rails de fixation (29) dirigés vers l'avant et parallèles entre eux, qui sont étayés vers le bas, à l'avant (33) du profilé carré (12), par des jambes de force (30), cependant que sur les rails de fixation (29) un siège (31) peut s'encranter au moyen d'un chariot dans plusieurs positions.

7. Avion léger des classes ultra-légère et Sport Plane Category suivant une des revendications 2 à 6, ***caractérisé en ce que*** le réservoir (25) est un récipient réalisé sous vide dans un moule extérieur négatif, à partir de matière plastique renforcée à la fibre de verre et moulée à chaud, ce réservoir ayant une contenance d'au moins 80 à 120 litres.

8. Avion léger des classes ultra-légère et Sport Plane Category suivant une des revendications 2 à 7, ***caractérisé en ce que**,* derrière le profilé carré (12), il est disposé sur le tube central (1) une poulie électrique (51) de câble, avec un moteur électrique et un renvoi d'angle, pour tirer le câble d'une commande par câble, destiné à la traction de planeurs.

9. Avion léger des classes ultra-légère et Sport Plane Category suivant une des revendications 2 à 8, ***caractérisé en ce que*** le support (2) du moteur est une construction tubulaire soudée, comportant quatre douilles filetées (24) parallèles entre elles, orientées vers l'avant et définissant les angles d'un trapèze et destinées à la fixation du moteur (35) par vissage, ce dernier étant installé au-dessus de la zone d'extrémité avant du tube central (1), et que, derrière le support (2) du moteur, il est disposé un refroidisseur d'air par échange.

10. Avion léger des classes ultra-légère et Sport Plane Category suivant une des revendications 2 à 9, ***caractérisé en ce qu*'**il est conçu comme monoplace pour tracter des planeurs, un réservoir d'appoint étant disposé sur le côté du tube central (1) opposé au siège du pilote.
